Europäisches Patentamt

European Patent Office

Office européen des brevets

(19)

(11) Numéro de publication: **0 344 061**
**A1**

## (12) DEMANDE DE BREVET EUROPEEN

(21) Numéro de dépôt: **89401410.9**

(22) Date de dépôt: **24.05.89**

(51) Int. Cl.⁴: **A 47 J 43/046**
A 47 J 42/56

(30) Priorité: **27.05.88 FR 8807069**

(43) Date de publication de la demande:
**29.11.89 Bulletin 89/48**

(84) Etats contractants désignés:
**AT BE CH DE ES GB GR IT LI LU NL SE**

(71) Demandeur: **ROBOT-COUPE S.A.**
**12, rue du Maréchal Leclerc**
**F-71303 Montceau-les-Mines (FR)**

(72) Inventeur: **Fleche, Michel**
**17, Rue Lavoisier**
**F-71450 Blanzy (FR)**

(74) Mandataire: **Viard, Jean**
**Cabinet VIARD 28 bis, avenue Mozart**
**F-75016 Paris (FR)**

(54) **Dispositif de sécurité pour un appareil de traitement des aliments.**

(57) Dispositif de sécurité pour un appareil de préparation des aliments, du type robot de cuisine, la cuve (2) présentant au-dessus d'une tige-poussoir (19) de contact, un logement (4) fermé à ses parties supérieure (5) et inférieure (6), et comportant des ouvertures latérales, le logement présentant une forme complexe, de sorte que seule puisse y pénétrer une clé portée par le couvercle.

FIG.8

EP 0 344 061 A1

## Description

La présente invention a pour objet un dispositif de sécurité destiné en particulier, mais non exclusivement à un appareil de traitement des aliments du type robot de cuisine.

On sait que dans de tels appareils, différents outils peuvent tourner à l'intérieur d'une cuve à des vitesses plus ou moins élevées, ces outils étant généralement tranchants. Il importe donc d'éviter tout contact d'une main avec un outil en rotation pour prévenir les accidents. A cet effet, il est connu de prévoir un couvercle, verrouillable sur la cuve, interdisant le passage de la main ou même d'un doigt à l'intérieur de la cuve, l'introduction des produits à traiter étant réalisée par une goulotte de hauteur suffisante.

Il est également connu de prévoir des moyens inhibant le fonctionnement du moteur électrique, tant que la cuve n'est pas montée sur le socle du moteur, et tant que cette cuve n'est pas fermée par le couvercle approprié. Dans un premier type de robot, c'est une patte solidaire du couvercle qui pénètre dans le socle parallèle pour agir sur un interrupteur, lorsque le socle s'étend verticalement et parallèlement à la cuve.

Dans le second cas, lorsque le socle renfermant le moteur est au-dessous de la cuve, il est connu, par FR-A-2 147 361 (P. VERDUN), de prévoir selon une génératrice de la cuve cylindrique, une tige-poussoir coulissant dans un canal approprié, dont l'extrémité inférieure est destinée à agir sur un interrupteur de commande du moteur, porté par le carter de celui-ci, le couvercle amovible comportant une came susceptible d'agir sur l'extrémité du poussoir lorsqu'il est en place. Ainsi, en principe, le moteur ne peut être mis en fonctionnement que lorsque la cuve est montée sur le carter ou socle, et lorsqu'elle est fermée par le couvercle convenable.

Mais la sécurité ainsi obtenue n'est pas absolue. En effet, lorsque la cuve est en place, une mise en marche frauduleuse du moteur peut être obtenue en effectuant une pression à l'aide d'un objet quelconque sur l'extrémité supérieure du poussoir qui fait saillie au-dessus du canal. Il est même possible d'agir sur le poussoir au moyen du couvercle, sans que celui-ci soit verrouillé.

La présente invention a pour objet de pallier cet inconvénient.

EP-A-0 127 898 décrit un appareil de traitement des aliments dans lequel l'appui sur l'extrémité supérieure de la tige-poussoir de validation de mise en marche du moteur est obtenu, à l'intérieur d'un logement fermé à sa partie supérieure par un mécanisme à came commandé par pression sur un écran de protection entourant la goulotte.

G-B-A-2 075 626 se rapporte à un appareil du même type dans lequel la validation de mise en marche, correspondant à la fermeture du couvercle est obtenue par passage d'une came à l'intérieur d'une fente formée dans la partie supérieure du logement entourant l'extrémité supérieure de la tige-poussoir.

Ces dispositifs sont compliqués et par là, fragiles.

Selon l'invention, le dispositif de sécurité pour un appareil de préparation des aliments, comportant des outils interchangeables destinés à être adaptés sur l'arbre rotatif d'un moteur d'entraînement disposé sous la cuve de travail, celle-ci étant montée amovible sur le carter moteur, sa paroi périphérique comprenant un canal s'étendant sur toute sa hauteur à l'intérieur duquel est monté un poussoir coulissant dont l'extrêmité est destinée à agir sur un contacteur de commande du moteur porté par le carter de celui-ci, cependant que le couvercle amovible porte une came susceptible d'agir sur l'extrêmité supérieure du poussoir, est caractérisé en ce que l'extrêmité supérieure du poussoir fait saillie, au repos, dans un logement dont la surface supérieure est fermée, une paroi latérale du logement présentant une ouverture de forme complexe, la came solidaire du couvercle présentant une section adaptée pour pénétrer à l'intérieur du logement.

Ainsi, il n'est plus possible d'accéder par le dessus à l'extrêmité supérieure du poussoir qui se trouve protégé contre les manoeuvres illicites.

C'est-à-dire que la came, dont la partie antérieure présente un profil inverse ou conjugué de celui de l'ouverture, constitue, en quelque sorte, une clé permettant la mise en route du moteur, le logement jouant le rôle d'une serrure.

Bien entendu, la pénétration de la came dans le logement correspond à un verrouillage simultané du couvercle sur la cuve et ne peut être obtenue que par rotation du couvercle sur la partie supérieure de la cuve.

D'autres caractéristiques et avantages de l'invention apparaîtront au cours de la description qui va suivre d'un mode particulier de réalisation de l'invention, donné uniquement à titre d'exemple non limitatif, en regard des dessins qui représentent :

- la figure 1 une vue en perspective d'une partie de la cuve ;
- la figure 2, une vue en perspective d'une partie du couvercle;

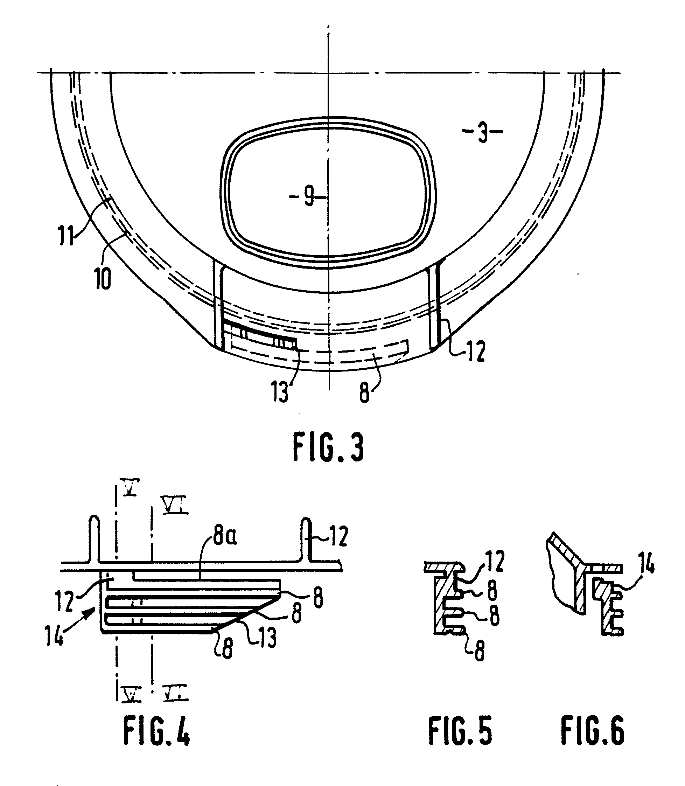

- la figure 3, une vue par-dessus d'un demi-couvercle ;
- la figure 4, une vue de côté de la clé ;
- la figure 5, une vue en coupe de la cuve selon la ligne V-V de la figure 4 ;
- la figure 6, une vue en coupe selon la ligne VI-VI de la figure 4 ;
- la figure 7, une vue en coupe verticale du couvercle ;
- la figure 8, une vue en coupe verticale de la cuve.

Sur les figures, la cuve est référencée d'une manière générale par le chiffre 2, et le couvercle par le chiffre 3.

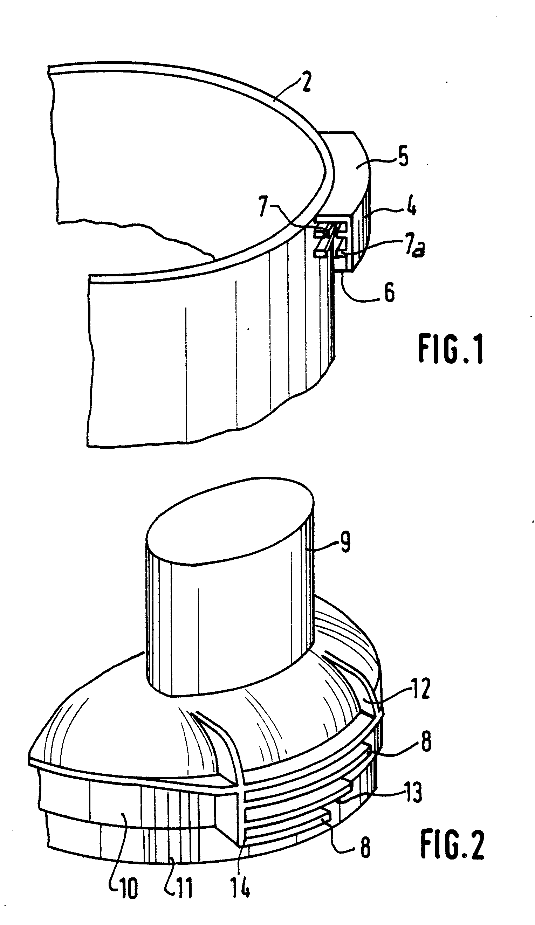

Sur la figure 1 est représentée une partie de la cuve cylindrique 2. Sur cette figure, on voit qu'est prévu, à la partie supérieure de la cuve 2, un logement 4 dont la surface supérieure 5 est fermée et s'étend dans le plan du bord supérieur de la cuve 2. Le logement 4 est fermé à sa partie inférieure par un rebord 6. A l'intérieur du logement 4 sont formées des rainures 7, entre des nervures 7a, présentant la forme d'arcs de cercles, parallèles au bord supérieur de la cuve, dont la fonction sera explicitée ci-dessous.

Sur la figure 2, on voit que le couvercle 3 présente une forme bombée et un organe 14 comportant des dents 8 formant des arcs de cercles dont le centre est celui du couvercle. Le couvercle 3 présente, comme connu en soi, une goulotte 9 pour l'introduction des produits, un bord 10 venant porter sur le bord supérieur et la cuve 2, et une jupe 11 pénétrant à l'intérieur de la cuve, afin d'assurer une bonne étanchéité.

Les dents 8 sont solidaires d'un support 12 et la partie antérieure de l'organe 14 forme un plan incliné 13 destiné à constituer une came susceptible d'actionner la tige-poussoir.

Cette partie formant une sorte de sabot, venant du moulage avec le couvercle, et désignée d'une manière générale par la référence 14, présente une conformation telle que sa partie avant puisse pénétrer à l'intérieur du logement 4 de la cuve, la came 13 venant porter sur l'extrémité supérieure d'une tige-poussoir dont la translation verticale commande un interrupteur de mise en marche du moteur de l'appareil. A cet effet, une rainure 8a peut s'engager de part et d'autre du rebord 5.

La présence des rainures 7 et des nervures 7a s'oppose à la pénétration d'un objet autre que la clé 14. De même, la fermeture de la partie supérieure du logement 4 par une paroi 5 interdit un appui direct sur l'extrémité supérieure de la tige-poussoir.

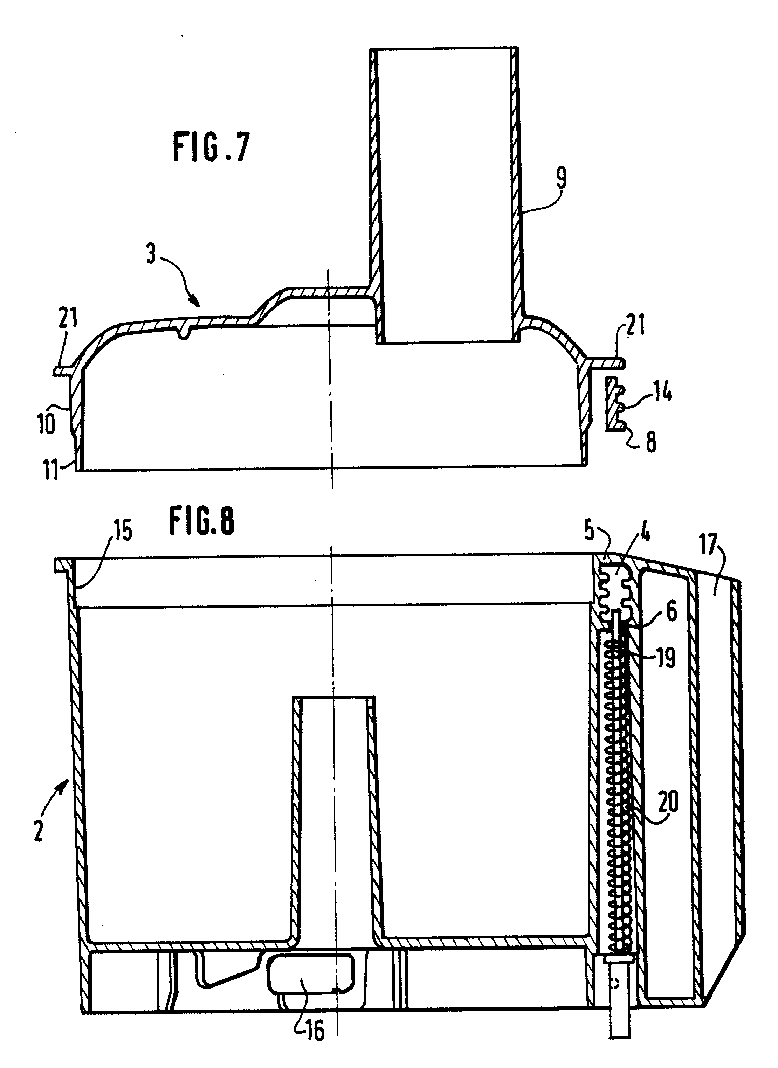

Bien entendu, et comme cela apparaît sur les figures 7 et 8, le couvercle 3 et la cuve 2 portent à leur périphérie, des moyens de verrouillage (non représentés) qui ne peuvent être fermés qu'après que le couvercle ait été assujetti convenablement sur le haut de la cuve, pénétrant dans le dégagement cylindrique 15. Dans cet exemple, la clé 14 est supportée par un rebord 21 du couvercle.

De même, la clé 14 ne peut pénétrer à l'intérieur du logement 4 que lorsque le couvercle est au niveau convenable à l'intérieur de la cuve.

Comme cela apparaît sur la figure 8, la cuve 2 présente des moyens de verrouillage 16 sur le socle du moteur (non représenté). Elle est munie d'une poignée 17, une tige-poussoir 19 pouvant coulisser dans un logement 20 disposé à l'aplomb du logement 4.

Ainsi, l'appareil ne peut fonctionner que lorsque la cuve 2 est convenablement montée sur le socle, et que le bon couvercle 3 est verrouillé sur la cuve 2.

Bien entendu, l'ouverture latérale du logement 4 peut présenter une forme quelconque, conjuguée de la forme de la clé 14.

## Revendications

1. Dispositif de sécurité pour un appareil de préparation des aliments, comportant des outils interchangeables destinés à être adaptés sur l'arbre rotatif d'un moteur d'entraînement disposé sous la cuve de travail, celle-ci étant montée amovible sur le carter moteur, sa paroi périphérique comprenant un canal s'étendant sur toute sa hauteur à l'intérieur duquel est monté un poussoir coulissant dont l'extrémité est destinée à agir sur un contacteur de commande du moteur porté par le carter de celui-ci, cependant que le couvercle amovible porte une came susceptible d'agir sur l'extrémité supérieure du poussoir, caractérisé en ce que l'extrémité supérieure du poussoir (19) fait saillie, au repos, dans un logement (4) dont la surface supérieure (5) est fermée, une paroi latérale du logement (4) présentant une ouverture de forme complexe, la came (13) solidaire du couvercle présentant une section adaptée pour pénétrer à l'intérieur du logement (4).

2. Dispositif de sécurité selon la revendication 1, caractérisé en ce que la came (13) est solidarisée du couvercle (3) par un support (12) portant, sur au moins l'une de ses parois latérales, des dents (8) pouvant pénétrer dans des rainures (7) du logement (4).

**FIG.1**

**FIG.2**

-3-

-9-

11

10

13

8

12

**FIG.3**

VI

8a

12

12

8

8

14

8

13

**FIG.4**

12

8

8

8

**FIG.5**

14

**FIG.6**

FIG.7

3

21

9

21

14

8

10

11

FIG.8

15

5   4   17

6

19

20

2

16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | EP-A-0 127 898  (CUISINARTS) <br> * Résumé; page 18, ligne 11 - page 20, ligne 19; figures * | 1 | A 47 J  43/046 <br> A 47 J  42/56 |
| A,D | | 2 | |
| A,D | --- <br> GB-A-2 075 626  (CUISINARTS) <br> * Page 3, lignes 5-17; figures * <br> ----- | 1,2 | |

DOMAINES TECHNIQUES
RECHERCHES (Int. Cl.4)

A 47 J

Le présent rapport a été établi pour toutes les revendications

| Lieu de la recherche | Date d'achevement de la recherche | Examinateur |
|---|---|---|
| LA HAYE | 20-07-1989 | GAIC P.M.Z. |

EPO FORM 1503 03.82 (P0402)